# EUROPEAN PATENT SPECIFICATION

(11) **EP 1 182 833 B1**
(45) Date of publication and mention of the grant of the patent: **26.04.2006**
(21) Application number: 01307103.0
(22) Date of filing: 21.08.2001
(51) Int. Cl.: H04L 12/56, H04L 12/28, G07G 1/14

(54) **Information exchange method and cash register apparatus**
VERFAHREN ZUM INFORMATIONSAUSTAUSCH UND REGISTRIERKASSENSYSTEM
PROCEDE POUR ECHANGER DES INFORMATIONS ET SYSTEME DE CAISSE ENREGISTREUSE

(30) Priority: 21.08.2000 JP 2000250014
(43) Date of publication of application: 27.02.2002
(73) Proprietor: KABUSHIKI KAISHA TOSHIBA, Tokyo 105-8001 (JP)
(72) Inventor: Sugikara, Akihiko, Intell. Property Division, Minato-ku, Tokyo 105-8001 (JP); Sata, Yutaka, Intell. Property Division, Minato-ku, Tokyo 105-8001 (JP); Doi, Miwako, Intell. Property Division, Minato-ku, Tokyo 105-8001 (JP)
(74) Representative: Midgley, Jonathan Lee

(56) References cited:
- EP-A- 0 295 658
- EP-A- 0 856 812
- US-A- 6 078 806

## Description

The present invention relates to a cash register apparatus for a POS (Point of Sales) system. More particularly, the present invention relates to a cash register apparatus for carrying out information exchange with a hand held communication terminal such as hand held telephone set via a short distance wireless communication (for example, Bluetooth (TM)), thereby providing services such as discount of payment to a customer.

Conventionally, it has been well known that an effective transmission distance range of a wireless LAN is 100 m or more. Recently, attention has been paid to a short distance wireless communication system in which a transmission distance is about 10 m. This short distance wireless communication system uses a small amount of power because of its narrow range, and is suitable to a hand held communication terminal. For example, Bluetooth is one of such short distance wireless communication systems. In the recent years, an attempt has been made to incorporate this Bluetooth communication function in a hand held communication terminal such as hand held telephone set (hereinafter, simply referred to as a "hand held terminal").

Hereinafter, a description will be given by way of example when communication is made a hand held terminal enabling wireless communication via Bluetooth (hereinafter, simply referred to as a "Bluetooth terminal") and another device enabling wireless communication via Bluetooth (hereinafter, simply referred to as a "Bluetooth terminal"), thereby providing services to a user who possesses the Bluetooth hand held terminal.

Bluetooth uses a commercially available frequency bandwidth, and is easily subjected to interference caused by other device. Therefore, Bluetooth uses a frequency hopping technique, thereby enabling the Bluetooth to be hardly subjected to interference from the other device.

The Bluetooth terminal scans a predetermined frequency bandwidth sequentially in a phase for making a search for other Bluetooth hand held terminal that exists in a communication area, and finds out a Bluetooth hand held terminal that is standby in a communication enable state. From the Bluetooth hand held terminal in the connection enable state, its own terminal identification information is transmitted. The terminal in the connection enable state periodically changes an available frequency. Thus, a time interval of several seconds is required for the searching Bluetooth terminal to find out a standby terminal. Even under an ideal condition, it may take about 10 seconds depending on a situation. When an interfering device exists, more time is required.

A Bluetooth terminal collects 48-bit terminal identification information from some Bluetooth hand held terminals that have been found out, and uses 24 bits of the above 48 bits, thereby providing frequency hopping pattern setting relevant to a desired (selected) Bluetooth hand held terminal. In this manner, a physical link is established. Thereafter, protocols are executed in stacks so as to enable information exchange at an application level. If a connection is established at such application level, the Bluetooth terminal makes communication with a connected remote Bluetooth hand held terminal through such connection, thereby providing predetermined services.

When such Bluetooth hand held terminal becomes popular, it is possible to provide services at an arbitrary place according to such place. For example, at a convenience store or supermarket, it is desired to provide services oriented to a purchaser such as electronic coupon service or electronic point service.

In general, wireless communication has an advantage that such wireless communication is not affected by a positional relationship between two devices or by an interrupt as compared with communication utilizing red infrared rays, whereas the wireless communication has a characteristic that it is difficult to establish a connection with only a terminal that exists at a specific position.

Now, a description will be given with respect to problems, assuming that communication with a cash register device being a Bluetooth terminal is made at the time of payment at a register of a convenience store by a user who holds an electric coupon in the Bluetooth hand held terminal, thereby utilizing such electronic coupon.

At this time, in the case where one customer and one register exist, there does not occur a problem because a relationship between a Bluetooth hand held terminal owned by a customer making a payment and a cash register device is uniquely determined. Namely, even if one operating the cash register device finds out a Bluetooth hand held terminal by employing the above Bluetooth hand held terminal search function, such terminal can be regarded as being owned by the customer making a payment.

However, in the case where another customer having a similar Bluetooth hand held terminal as well as a customer who makes payment to a register is making a line, a plurality of Bluetooth hand held terminals are found at the time of search. In order to judge which Bluetooth hand held terminal is owned by a customer who will make a payment, it is required to check such terminal with the customer by employing any information associated with the Bluetooth hand held terminal.

In addition, in the case where a plurality of registers exist, a Bluetooth hand held terminal of a customer who is making a line at the neighboring register as well is found out, thus requiring another problem with specification of a remote Bluetooth hand held terminal.

Such check impedes a work essential to a cash register device. If one operating the cash register device specifies an incorrect Bluetooth hand held terminal, an amount of money is calculated based on a coupon possessed by an incorrect customer, thus requiring more redundant work for such cancellation.

In addition, a Bluetooth hand held terminal finding process requires some tens seconds. During this period, a work essential to a cash register device is interrupted, which becomes a "bottle neck" of the cash register device during congestion.

In the meantime, in a generally used cash register device for a POS system, it is required to input customer information (such as gender or age) in a cash register device during payment of commodities in order to connect marketing information. For the purpose of this requirement, for example, a specific membership card is provided to each customer so as to read such membership card through a magnetic reader. Each customer is required to possess a coupon ticket, a point card, and a membership card when he or she receives customer services at retail shop such as supermarket or convenience store. It is cumbersome to always carry them.

In this way, in the case where an attempt is made to provide predetermined services to a user of the hand held communication terminal by making a short distance wireless communication with a hand held communication terminal, there has been a problem that a hand held communication terminal possessed by a remote user to which services are provided can be hardly specified (requires more time intervals).

In addition, in a conventional cash register device for a POS system, there has been a problem that, when providing services such as discount to a customer, it is required for a customer himself or herself to carry a lot of cards or coupon tickets, and more time intervals are required for providing services to one customer because a log of cards or coupon tickets must be manually processed.

The present invention has been made in order to solve the foregoing problem.

EP-A-0856812 discloses an information exchange method of exchanging information between a communication terminal having a short distance wireless communication device and a host having another short distance wireless communication device and an information acquisition device, said method comprising the steps of:
a. acquiring identification information identifying the communication terminal by the information acquisition device;
b. establishing a short distance wireless communication path between the communication terminal and the host in reference to the identification information; and
c. initiating an information exchange between the communication terminal and the host based on a communication between the short distance wireless communication devices using the established short distance wireless communication path.

US-A-6078806 is also relevant in this respect.

The present invention provides an information exchange method as defined in claim 1 and cash register apparatus as defined in claim 11.

In the case of providing predetermined services to a user of the hand held communication terminal, it is possible with the invention to easily and reliably specify a hand held communication terminal possessed by a user to which services are provided, and capable of reducing the time in providing services.

The invention can be more fully understood from the following detailed description of preferred embodiments when taken in conjunction with the accompanying drawings, in which:
FIG. 1 is a view showing an exemplary configuration of a POS system employing a cash register apparatus according to a first embodiment of the present invention, and showing a case when hand held terminal identification information is acquired by reading a bar code;
FIG. 2 is a view showing an exemplary configuration of a POS system employing a cash register apparatus according to the first embodiment of the present invention, and showing a case when the hand held terminal identification information is acquired by a wireless tag;
FIG. 3 is a view showing an exemplary configuration of a POS system employing a cash register apparatus according to the first embodiment of the present invention, and showing a case when the hand held terminal identification information is acquired via red-infrared ray communication;
FIG. 4 is a view shoring an exemplary configuration of a POS system employing a cash register apparatus according to the first embodiment of the present invention, and showing a case when the hand held identification information is acquired by image processing;
FIG. 5 is a view showing an exemplary configuration of a hand held terminal according to the first embodiment of the present invention, and showing an exemplary configuration of the hand held terminal that corresponds to the cash register apparatus shown in FIGS. 1 and 4;
FIG. 6 is a view showing an exemplary configuration of the hand held terminal according to the first embodiment of the invention, and showing an exemplary configuration of the hand held terminal that corresponds to the cash register apparatus shown in FIG. 2;
FIG. 7 is a view showing an exemplary configuration of the hand held terminal according to the first embodiment of the invention, and showing an exemplary configuration of the hand held terminal that corresponds to the cash register apparatus shown in FIG. 3;
FIG. 8 is a flow chart illustrating a processing function of a cash register apparatus according to the first embodiment of the present invention;
FIG. 9 is a flow chart illustrating a processing function of a cash register apparatus according to a second embodiment of the present invention;
FIG. 10 is a flow chart illustrating a processing function of a cash register apparatus according to a third embodiment of the present invention;
FIG. 11A is a view showing a storage example of customer information (transmitted from the cash register apparatus by being associated with hand held terminal identification information) in a POS server of a POS system according to the first to third embodiments;
FIG. 11B is a view showing a storage example of coupon information containing customer information;
FIG. 11C is a view showing a storage example of point information containing customer information; and
FIG. 12 is a view showing a example of displaying a bar code.

Hereinafter, embodiments of the present invention will be described with reference to the accompanying drawings.

### (First Embodiment)

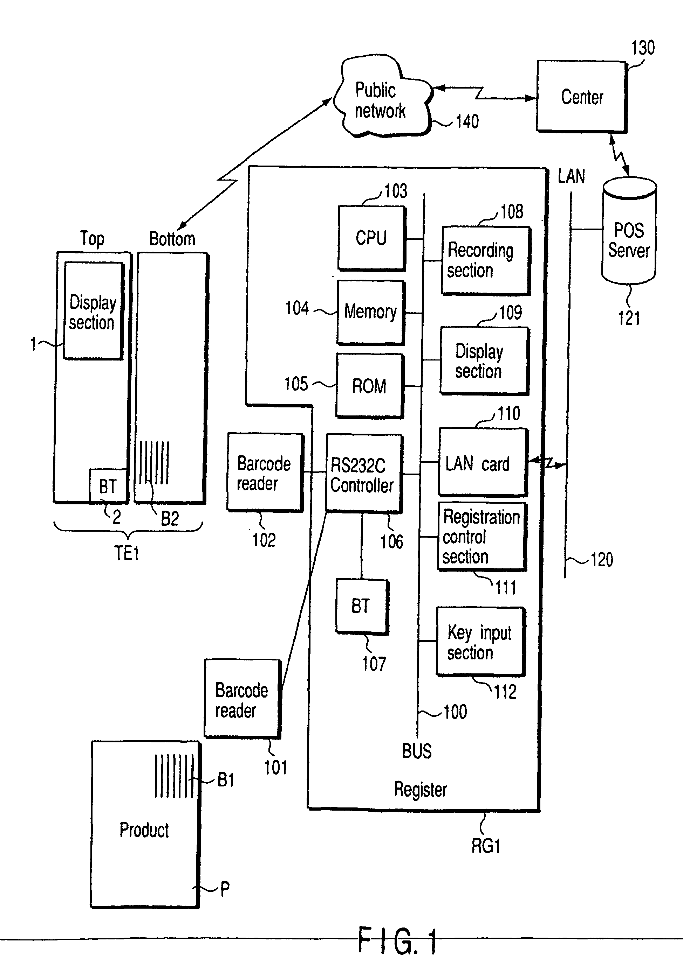

FIG. 1 shows an exemplary configuration of a cash register apparatus employing an information exchange apparatus according to the present invention and a POS (Point of Sales) system employing the cash register apparatus.

In a cash register apparatus RG1 shown in FIG. 1, by employing a company code or product code and the like read out from a bar code B1 printed on or attached to a product P, an amount of money for the product P is inquired to a POS server 121 connected to the cash register apparatus RG1 via a LAN card 110 and a LAN 120. When information on such amount of money is received from the POS server 121, the amount of money is multiplied by the inputted quantity, and a total amount of money is calculated. The calculated total amount of money or the amount of money for the product and the total amount of money are represented on a display 109, and a receipt is issued at a record section 108. In addition, the product purchase history is fed to the POS server 121, and is stored therein. The POS server 121 employs the history for product sales management or inventory management and the like.

In order to achieve such processing functions essential to a cash register, the cash register apparatus RG1 has a function section required for information processing such as CPU 103, memory 104, or ROM 105. Further, this apparatus has an RS232C controller 102 as an interface for connecting a bar code reader 101 for reading a bar code B1 printed on or attached to the product P.

Furthermore, a key input section 112 for key inputting an amount of money for a product and a register control section 111 for controlling a mechanical section of the cash register apparatus RG are configured to be connected to a bus 100 together with each of the above constituent elements.

The cash register RG1 employs Bluetooth as communication means for making communication with each hand held terminal TE1 possessed by a customer for the purpose of customer service, and connects via an RS232C controller 106 a Bluetooth transmitting/receiving section (hereinafter, simply referred to as a BT) having each function required for Bluetooth communication such as Bluetooth transmission/reception module. BT107 is not always required to be connected to via an RS232C, and, for example, may be directly connected to an internal bus 100 or may be connected via an USB (Universal Serial Bus). If connection is enabled via the existing RS232C controller, BT107 is easily compatible with a current cash register.

BT107 is composed of protocol control portions described in a first edition of Bluetooth specification (Bluetooth version 1.0) such as antenna, base band section, or L2CAP (Logical Link Control and Adaptation Protocol) for making wireless communication in a 2.4 GHz bandwidth, for example.

The Bluetooth protocol is executed after being loaded in a memory 104 by means of a CPU 103 together with an application program for carrying out register processing and an application program that provides services to a customer via a hand held terminal. In addition, an OS, a driver, and an application are stored in a memory 104.

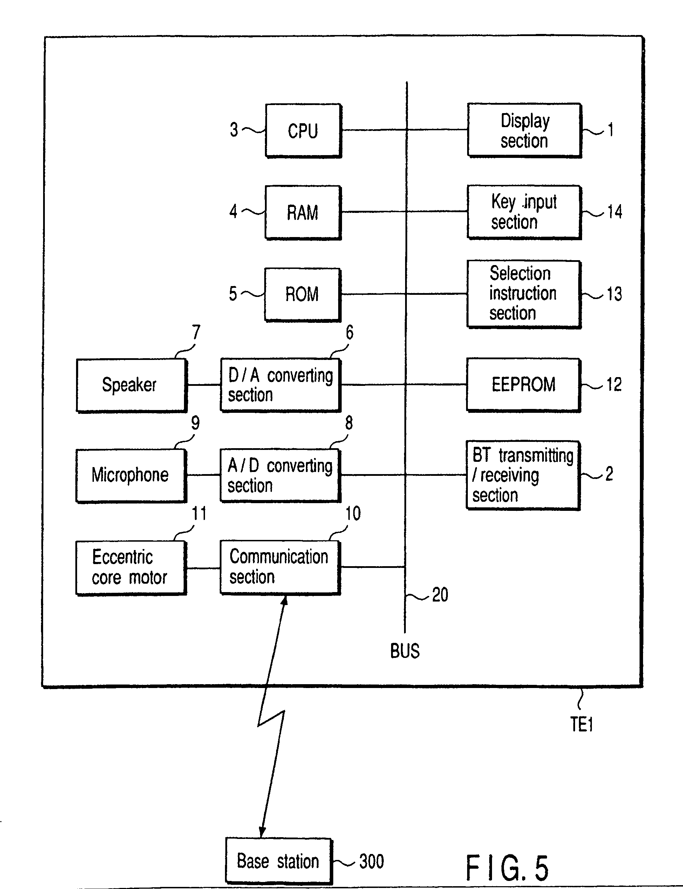

FIG. 5 shows an exemplary configuration of a hand held terminal TE1. This hand held terminal is configured such that a CPU 3, a RAM 4, a ROM 5, a D/A converting section 6, an A/D converting section 8, a communication section 10, a display section 1 such as liquid crystal display, a key input section 14, an EEPROM 12, a selection instructing section 13, a Bluetooth (BT) transmitting/receiving section 2 and the like are connected to a bus 20, for example.

The Bluetooth transmitting/receiving section 2 is provided to transmit/receive data for establishing a wireless communication channel between this section and the cash register apparatus RG1, for example, and for receiving customer services employing electronic coupon (coupon information) or electronic point (point information) stored in the RAM 4. The Bluetooth transmitting/receiving section 2 is composed of protocol control portions described in a first edition of the Bluetooth specification (Bluetooth Version 1.0) such as antenna, base band section, or L2CAP (Logical Link Control and Adaptation Protocol) for making wireless communication in a 2.4 GHz bandwidth, for example.

All global unique identification information is provided to terminals compatible with Bluetooth. This identification information ID is stored in the BT transmitting/receiving section 2 so that the ID can be read out by means of the CPU 3 any time.

A configuration concerning voice speech is similar to a conventional hand held telephone set. For example, a communication section 10 transmits/receives data by carrying out position registration between the communication section and a base station 300 or call control during call origination or call arrival. When communication terminates, this communication section carries out call control for disconnection, and further, carries out hand-over or the like during communication.

In the case where the communication section 10 has received a connection request from the base station 300, this communication section outputs a call sound from a speaker 7 or drives an eccentric core motor 11 and vibrates a main frame of the hand held terminal TE1, thereby invoking a notice of a user that is an owner of the hand held terminal TE1. After the user's connection recognition has been indicated, a carrier makes line connection between two points, and then, communication is started.

During communication, the hand held terminal TE1 converts a voice inputted from a microphone 9 from an analog signal to a digital signal by means of an A/D converting section 8. The converted signal is subjected to digital data compression processing under the control of the CPU 3, and is transmitted to the proximal base station 300 through the communication section 10. In addition, a signal received at the communication section 10 is subjected to decompression processing or the like under the control of the CPU 3, and is restored to an original signal. Then, the resultant signal is converted from a digital signal to an analog signal by means of the D/A converting section 6, and the converted signal is outputted from the speaker 7.

Further, apart from a speech, in order to carry out a variety of information processing functions, there are provided: a CPU 3 for executing a predetermined program; a ROM 5 for storing program or dictionary data; a RAM 4 for storing temporary variables or data; an EEPROM 12 for saving individual registration information; a display section 1 for displaying data; a key input section 14 for inputting telephone numbers, numerals or characters; a selection instructing section 13 for making a menu selection or the like.

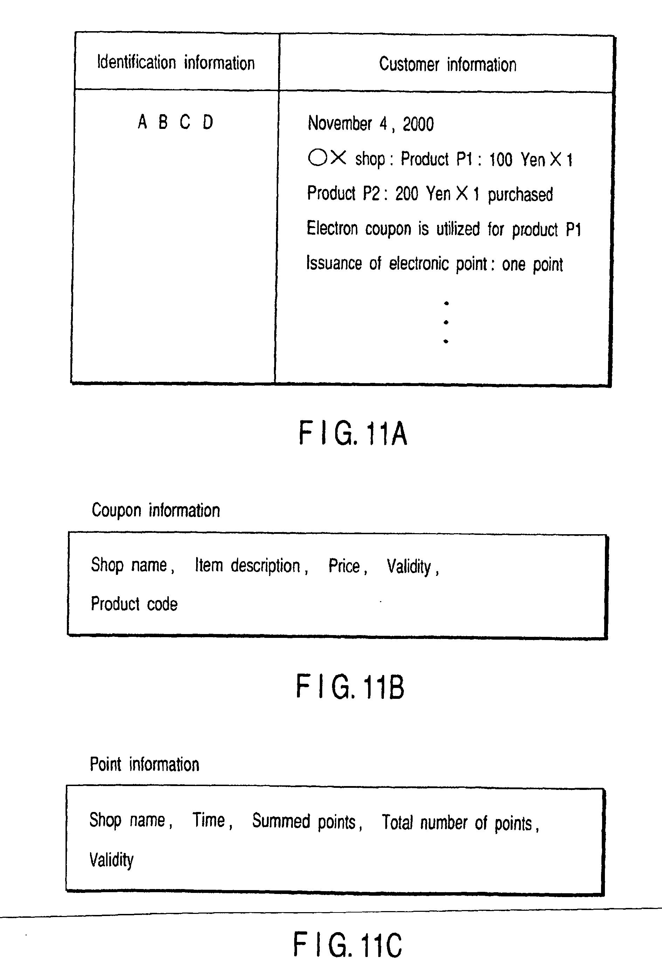

A POS server 121 manages product names or prices. From the cash register apparatus RG1, the POS system input data is sent after being associated with identification information contained in the hand held terminal TE1. Purchase update information on when, where, what, and how much a customer has purchased or customer information containing utilization of electronic coupon or points is then collected. For example, as shown in FIG. 11A, these items of customer information are managed to be associated with identification information contained in the hand held terminal TE1 possessed by each customer, and are utilized for product sales management or inventory management and for acquisition of various statistics by customer or product. In addition, as customer information, the information as shown in FIG. 11A may be associated with electronic coupon (coupon information) as shown in FIG. 11B or electronic point (point information) as shown in FIG. 11C, these items of information being utilized by the customer during product purchase.

A center 130 is intended to provide a variety of services to each customer based on information managed by the POS server 121. For example, this center delivers an electronic coupon or an electronic point to the customer's hand held terminal TE1 through Internet via a public line (hand held telephone network) 140.

The center 130 and POS server 121 store an electronic coupon (coupon information) as shown in FIG. 11B or an electronic point (point information) as shown in FIG. 11C. These elements transmit these electronic coupon and electronic point to the cash register apparatus RG1 or the customer's hand held terminal TE as required.

Now, an example of services provided to a customer through the cash register apparatus RG1, i.e., customer services employing an electronic coupon and an electronic point will be described here.

An electronic coupon denotes information capable of discounting a price of a specific item. For example, as shown in FIG. 11B, this coupon is composed of information such as shop name, item identifier, an amount of money for discount or validity. The information is stored in the customer's hand held terminal TE1 (for example, EEPROM 12) by acquiring it from the cash register apparatus RG1 during previous payment. A customer can receive services such as discount by transmitting an electronic coupon from the hand held terminal TE1 to the cash register apparatus RG1 during payment.

An electronic point is information that contains a point given every time a predetermined amount of money is paid, and one point is given for one dollar, for example. In the electronic point, during payment, it is assumed that a packet of the electronic point composed of information such as shop name, point, or validity as shown in FIG. 11C is transmitted from the cash register apparatus RG1 to the customer's hand held terminal TE1 through Bluetooth communication, and is stored in the customer's hand held terminal TE1 (for example, EEPROM 12). When points of the electronic point are accumulated in predetermined number, the customer receives services according to the number of points by making a request for a center 130 via a public network 140 or through Bluetooth communication between the center and the cash register apparatus RG1 (such as mailing of desired free gift or distribution of electronic coupon, for example).

The service provision history employing electronic coupon or electronic point achieved by making a request through the cash register apparatus RG1 or center 130 as well is recorded as customer information in the POS server 121, is utilized for analysis of individual precision, and is available for use in issuance of electronic coupon to each customer accordingly or guidance of new products.

Note that advertisement information relating to new products and services may be sent from the cash register apparatus RG1 to the customer's hand held terminal TE1.

Now, a description will be given with respect to a method for acquiring identification information from the hand held terminal TE1 possessed by each customer who receives services such as discount from the cash register RG1.

In general, globally unique identification information is provided to a Bluetooth compatible terminal. In a Bluetooth terminal search phase, when a hand held terminal TE1 being a slave makes a response to inquiry from the cash register apparatus RG1 being a master, each hand held terminal TE1 notifies its own identification information to the master. However, if the identification information on the hand held terminal TE1 is acquired by this method, it takes long as described in the Description of the Related Art, thus making it necessary to take means other than means employing Bluetooth.

Apart from employing Bluetooth, the cash register apparatus RG1 acquires identification information on hand held terminal TE1 by:
(1) employing a bar code reader to read the bar code of identification information on the hand held terminal attached to the hand held terminal TE1;
(2) receiving identification information transmitted from the hand held terminal TE1 via a wireless tag;
(3) making IrDA (Infrared Data Association) communication with the hand held terminal TE1 to receive identification information; or
(4) displaying identification information on the hand held terminal on a display section 1 of the hand held terminal TE1, acquiring this image at an image acquisition element, and carrying out image recognition processing to acquire identification information.

First, a description will be given with respect to an example when identification information ID of a hand held terminal is acquired by employing a bar code reader.

The cash register apparatus RG1 may employ a bar code reader for reading identification information ID of a hand held terminal TE1 as a bar code reader 101 for inputting an amount of money for product P or it may employ another specific bar code reader.

Currently, a bar code called JAN code available for use in Japanese distribution industry uses 13-digit numbers. These 13-digit numbers are composed of a two-digit nation code, a five-digit company code, a five-digit product code, and a one-digit check code.

Identification information on the hand held terminal TE1 is acquired by 48 bits, 24 bits (16,000,000 8 digits) of which are actually employed as identification information. In the case where these 24 bits are used as identification information ID after recorded in part of the JAN code. In the case of using a specific bar code reader, bar code recognition software for recognizing a bar code of identification information ID of the hand held terminal TE1 is employed, thereby making it possible to acquire an identification information ID.

In the case where a 13-digit JAN code will not suffice due to an increased number of bits required for establishing a link, the number of bar code digits may be increased or the acquired identification information may be converted into actually required identification information ID by means of computation.

Note that the JAN code system has a compatibility with the UPC and EAN code systems. The person skilled in the art will recognize that these code systems are easily embodied in place of the JAN code system.

Bluetooth is used for a variety of devices other than a hand held terminal. Thus, the number of devices actually used in mobile environment is fewer than that expressed by 48 bits, thus making it possible to reduce the number of digits for identification information ID.

Alternatively, there is a method for additionally providing another unique identification information that differs from identification information for Bluetooth to each hand held terminal TE1 (for example, registering the information in a memory 104); and utilizing a conversion table from another identification information stored in the POS server 121 into identification information for Bluetooth to acquire identification information for Bluetooth. This method can be utilized when the methods shown in (2) to (4) as well as the method of (1) above are employed.

FIG. 1 shows a configuration of a cash register apparatus RG1 when a bar code reader 102 for reading identification information ID of the hand held terminal TE1 is provided independently of a bar code reader 101 for inputting an amount of money for product P, and this bar code reader 102 is employed to be connected to an RS232C controller 106.

FIG. 5 shows a configuration of a hand held terminal TE1 when identification information ID of the hand held terminal TE1 is read by means of a bar code.

The bar code should not necessary be pasted on the back side surface of the handy terminal TE1 like as shown in FIG 1. Instead, for example, as shown in FIG. 12, the bar code may be displayed by displaying section 1. The displayed bar code would be read by the bar code reader 102. Furthermore, the bar code may be a two-dimensional bar code.

Now, a description will be given with respect to the method shown in (2), i.e., a case of receiving identification transmitted from the hand held terminal TE1 via a wireless tag.

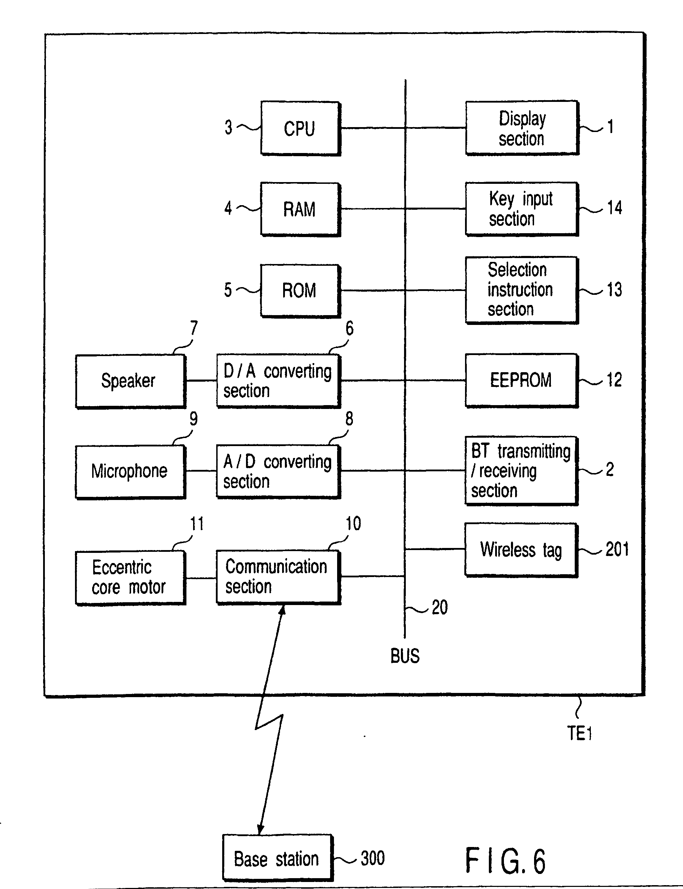

In this case, the hand held terminal TE1, as shown in FIG. 6, is configured by further connecting a wireless tag (called RFID) 201 to a bus 20 in the configuration shown in FIG. 5. The wireless tag transmits and receives data by generating a weak RF (Wireless Frequency). A CPU 3 reads out identification information ID from a BT transmitting/receiving section in advance, and stores identification information ID in this wireless tag 201 as well.

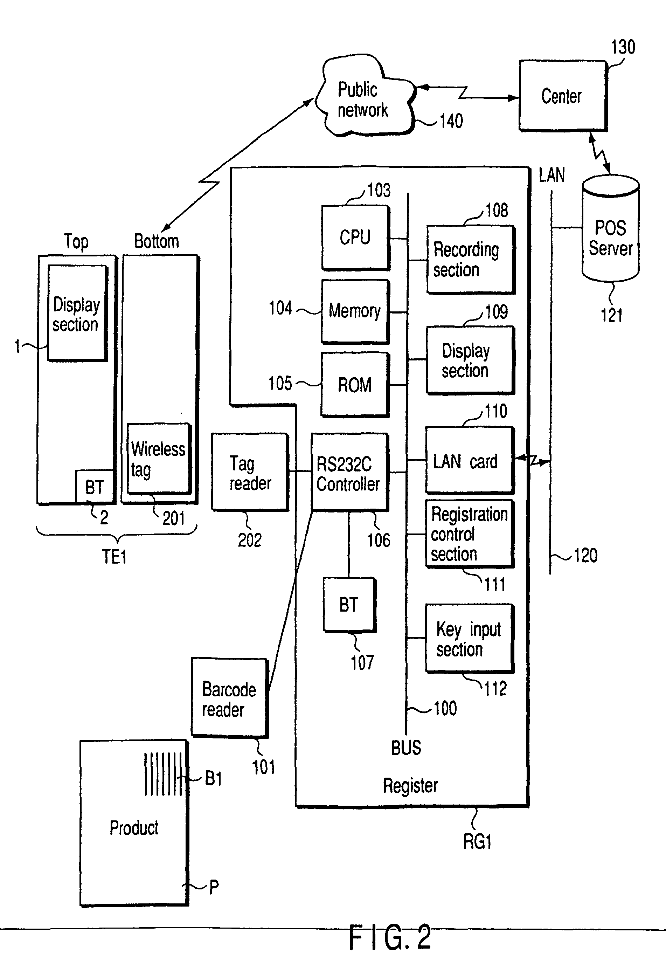

On the other hand, the cash register apparatus RG1, as shown in FIG. 2, is configured by further connecting a tag reader for receiving identification information ID transmitted from the wireless tag 201 to the RS232C controller 106 in the configuration shown in FIG. 1.

It is assumed that a passive type which does not require a battery is suitable to the wireless tag 201 of the hand held terminal TE1. In addition, there is no need to rewrite identification information ID. Thus, a wireless tag of write once/read many (WORM) type is employed, thereby making it possible to reduce cost. Further, an LF-MF bandwidth (100 to 500 KHz) is employed, thereby making it possible to reduce a communication distance to some centimeters and to restrain prices of the hand held terminal TE1 and cash register apparatus RG1. Furthermore, congestion with another device does not occur because an operator of the cash register RG1 carries out reading by making the tag reader 202 close to the hand held terminal TE1.

Now, a description will be given with respect to the method shown in (3), i.e., a case of receiving identification information ID by making IrDA communication with a hand held terminal TE1.

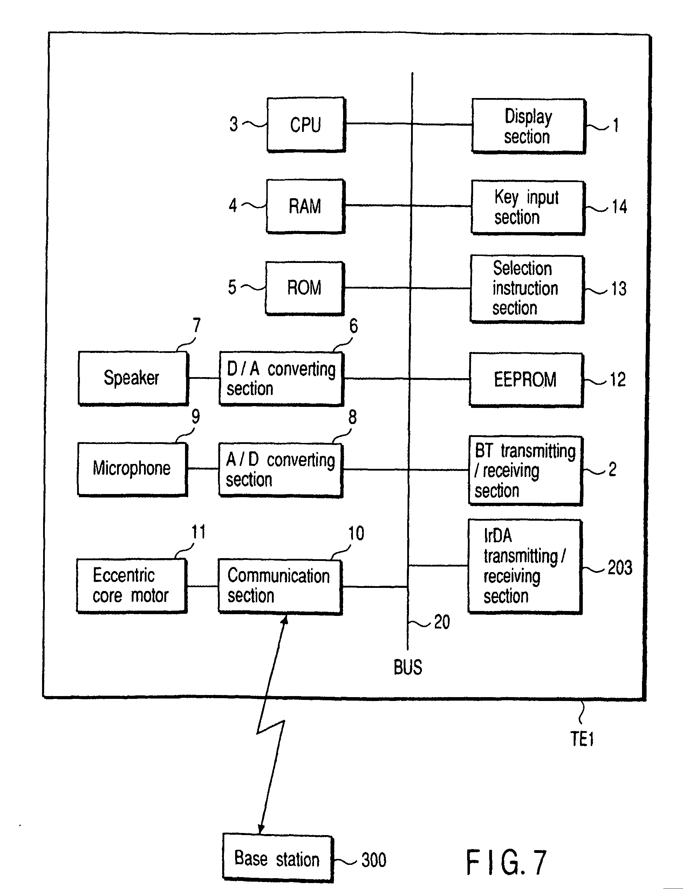

In this case, the hand held terminal TE1, as shown in FIG. 7, is configured by further connecting an IrDA transmitting/receiving section 203 to a bus 20 in the configuration shown in FIG. 5. A CPU 3 reads out identification information ID from a BT transmitting/receiving section 2, and then, transmits identification information ID from this IrDA transmitting/receiving section 203 to the cash register apparatus RG1.

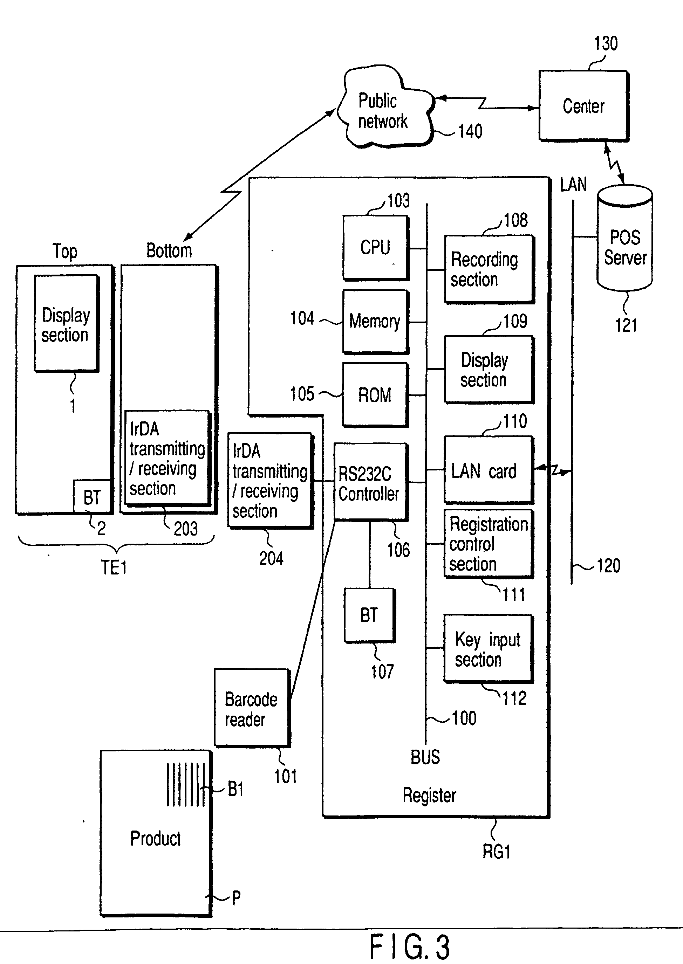

On the other hand, the cash register apparatus RG1, as shown in FIG. 3, is configured by further connecting an IrDA transmitting/receiving section 204 to an RS232C controller 106 in the configuration shown in FIG. 1. The identification information ID transmitted from the IrDA transmitting/receiving section 203 of the hand held terminal TE1 is received by this IrDA transmitting/receiving section 204.

IrDA is a communication system using a red infrared ray currently provided as standard. The IrDA has a communication directivity, and has properties that, if an interrupt exists, communication is disabled. Thus, an operator of the cash register apparatus RG1 applies the IrDA transmitting/receiving section 204 to the IrDA transmitting/receiving section 203 of the hand held terminal TE1, thereby making it possible for the cash register apparatus RG1 to acquire only identification information of a target hand held terminal TE1. A similar advantageous effect can be achieved by employing a unique communication system using a red infrared ray without employing the IrDA specification itself.

Now, a description will be given with respect to the method shown in (4), i.e., an example when identification information ID of the hand held terminal is displayed on a display section 1 of the hand held terminal TE1, this image is acquired at an image acquisition element, and image recognition processing is carried out, thereby acquiring identification information ID.

In this case, a configuration of the hand held terminal TE1 is similar to that shown in FIG. 5. When an application for services according to the present embodiment is initiated, a CPU 3 reads identification information ID from a BT transmitting/receiving section 2, and display the ID on the display section 1.

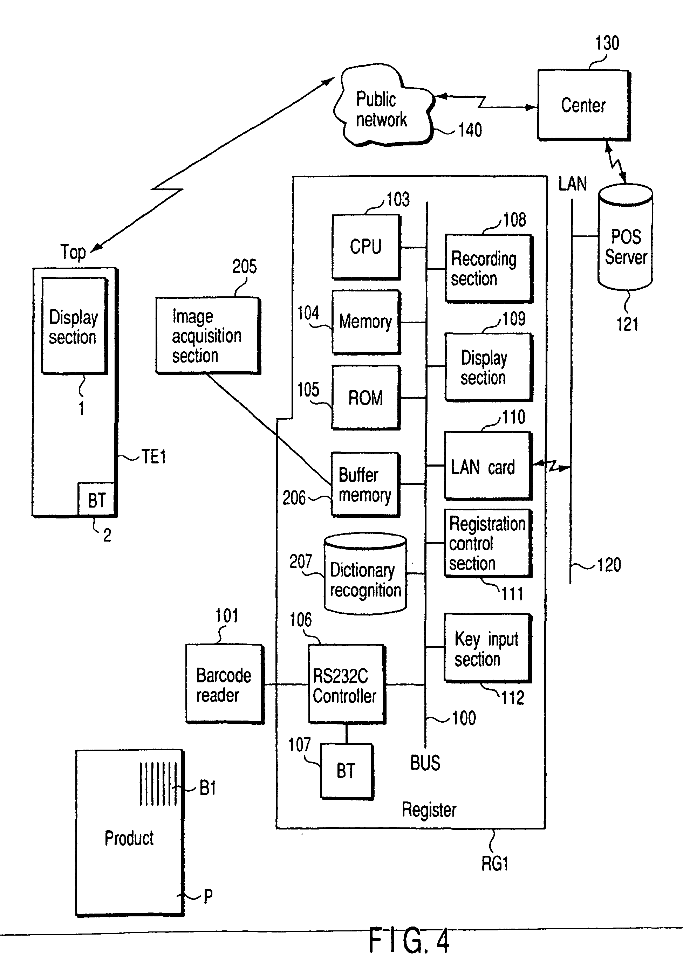

On the other hand, in addition to the configuration shown in FIG. 1, a cash register apparatus RG1, as shown in FIG. 4, further comprises: an image acquisition section 205 for acquiring an image of identification information ID displayed on the display section 1 of the hand held terminal TE1; a buffer memory 206 for temporarily storing the image acquired by the image acquisition section 205; and a recognition dictionary 207 required for image processing for recognizing identification information ID from the acquired image.

A focus of a lens of an image acquisition element such as CCD (charge Coupled Device) camera, for example, configuring the image acquisition section 205 is closely set. An operator of the cash register apparatus RG1 makes an image acquisition section 205 close to the display section 1 at which identification information ID of the hand held terminal TE1 targeted for processing is displayed, and acquires the image, thereby making it possible to prevent simultaneous input of the identification information ID displayed at the display section 1 of another hand held terminal TE1 in the vicinity of the hand held terminal TE1 targeted for processing.

Identification information ID itself or number or symbol corresponding to the ID is displayed at the display section 1 of the hand held terminal TE1. An image at a section displaying the identification information ID at the display section 1 inputted from the image acquisition section 205 is temporarily stored in a buffer memory 206. Then, cutout of a number or symbol area is carried out for image data stored in this buffer memory 206 under the control of a CPU 103, and number or symbol information is cut out from such region. Then, a characteristic quantity for each cut out number or symbol is calculated, and recognition of the identification information ID is carried out, referring to a recognition dictionary 207. Without being limited to an example when identification information ID is displayed on the display section 1, a difference in a main body or contrast is provided in advance in a main body of a hand held terminal TE1, identification information ID itself or the corresponding number or symbol is attached or printed, whereby this image may be acquired at the image acquisition section 205.

According to a method for acquiring identification information ID as shown above, the cash register apparatus RG1 makes it possible to acquire identification information on a hand held terminal TE1 that should be a communication counterpart within one second, and makes it possible to reduce some ten seconds required for a Bluetooth terminal search phase. In addition, an operator of the cash register apparatus RG1 merely makes a bar code reader 102, a tag reader 202, an IrDA transmitting/receiving section 204, and an image acquisition section 205 explicitly close to the hand held terminal TE1 which should define a tag reader 202, an IrDA transmitting/receiving section 204, or an image acquisition section 205 as a communication counterpart, thereby making it possible to indicate a hand held terminal TE1 that should be specified as a communication counterpart for (BT107 in particular) of the cash register RG1.

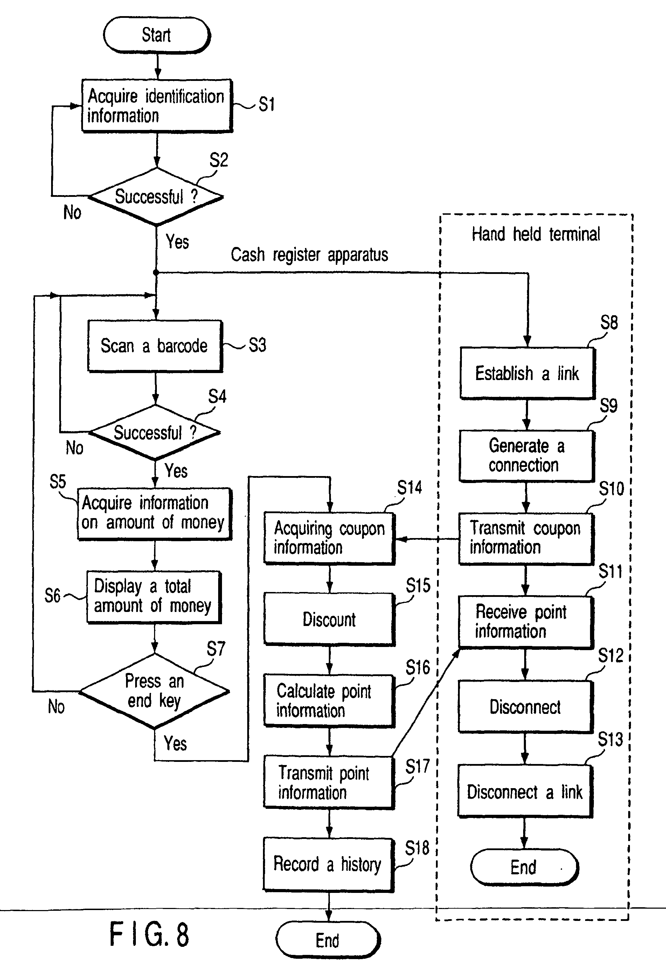

Now, a processing function of a cash register apparatus RG1 will be described together with a processing function of a hand held terminal TE1 with reference to a flow chart shown in FIG. 8.

The BT107 of the cash register apparatus RG1 acquires identification information ID of the hand held terminal TE1 to be specified as a Bluetooth communication counterpart by employing any of the above four methods, the hand held terminal TE1 of the customer making a payment (steps S1 and S2), the identification information ID of the acquired identification terminal TE1 is then acquired, whereby processing goes to a link establishment phase called paging defined in accordance with Bluetooth specification (step S8). After link establishment, channel establishment and service connection establishment are carried out (step S9). Any of these processing functions conforms to the Bluetooth specification. A detailed description is omitted here.

On the other hand, a customer receiving a scan action for acquiring identification information on a hand held terminal TE1 operates the hand held terminal TE1 from an operator of the cash register apparatus RG1 (hereinafter, simply referred to as a register operator), thereby initiating a specific application for receiving services caused by an electronic coupon or an electronic point. When this application is initiated, a BT transmitting/receiving section 2 of the hand held terminal TE1 is set to a "page" message reception mode specified in Bluetooth under the control of the CPU 3. Then, when a "page" message containing identification information on the hand held terminal TE1 is transmitted (broadcast) from the cash register apparatus RG1, only the BT transmitting/receiving section 2 of the hand held terminal TE1 having the identification information receives the message. Then, the hand held terminal TE1 being a slave that has receives this "page" message operates in a hopping pattern determined by the cash register apparatus RG1 being a master. Then, one waits until a link establishment request has been sent from the cash register apparatus RG11.

After a link with the cash register apparatus RG1 has been established upon the receipt of a processing function of step S8 or later of the cash register apparatus RG1, channel establishment and connection establishment are made in accordance with procedures determined in accordance with Bluetooth specification, making it possible to transmit/receive data to/from the cash register apparatus RG1 through the established connection. In this state, the hand held terminal TE1 reads out an electronic coupon stored there from an EEPROM 12, for example, under the control of the CPU 3, and transmits the electronic coupon from the BT transmitting/receiving section 2 to the cash register apparatus RG1.

When the cash register apparatus RG1 successfully acquires identification information on the hand held terminal TE1 at the step S2, this apparatus carries out registration processing that is a function essential to a cash register in parallel. That is, a bar code reader 101 reads a bar code B1 of product P to be purchased by the customer by means of a bar code reader 101 (steps S3 and S4), and acquires a price of the product P from the POS server 121 (step S5). The acquired price is multiplied by a quantity inputted from a key input section 112, and a total amount of money is calculated. Then, an amount of money for the product and a total amount of money are displayed on a display section 109 or a receipt is issued at a recording section 108 (steps S3 to S6). When bar code input (or key input) of all the products to be purchased by the customer is completed, and a total amount of them is obtained, a register operator instructs the end of registration processing by carrying out predetermined key input from the key input section 112 (step S7).

When an electronic coupon is transmitted from the hand held terminal TE1, the cash register apparatus RG1 receives the coupon at BT107 (step S10). Then, this apparatus carries out calculation processing for discounting the target product by employing a finalized total amount of money under the control of the CPU 3, and obtains a finalized total amount of money (steps S14 and S15). Further, a point is obtained according to a purchase price (step S16), and the point is transmitted as an electronic point from BT107 to the hand held terminal TE1 (steps S17 and S11). Then, customer information is transmitted as the customer's purchase history to the POS server 121 (step S18).

When an electronic point has been transmitted, BT107 of the cash register apparatus RG1 executes disconnection processing of a wireless transmission channel established between the apparatus and the hand held terminal TE1. That is, disconnection (step S12) and link disconnection (step S13) are carried out.

As has been described above, according to the above embodiment, the cash register apparatus RG1 making Bluetooth communication with the hand held terminal TE1 to provide predetermined services such as discount caused by an electronic coupon or an electronic point to a user of the wireless terminal TE1 acquires identification ID of the hand held terminal TE1 required to set a wireless transmission channel between the apparatus and the hand held terminal TE1 possessed by the customer that is a service provision destination by reading a bar code of the identification terminal TE1; transmitting the ID from the hand held terminal TE1 employing a wireless tag; making IrDA communication with the hand held terminal TE1; or recognizing the ID from an image of the identification information ID displayed at the display section 1 of the hand held terminal TE1; easily and reliably specifies the hand held terminal possessed by a customer that provides services by establishing a wireless transmission channel for transmitting/receiving an electronic coupon or an electronic point between the apparatus and the hand held terminal having the thus acquired identification information, making it possible to reduce time during service provision.

That is, a register operator makes a bar code reader 102, a tag reader 202, an IrDA transmitting/receiving section 204, or an image acquisition section 205 that is means for acquiring identification information explicitly close to a target hand held terminal TE1, making it possible to directly obtain only the identification information from the hand held terminal TE1 that should be a communication counterpart. Link establishment is carried out based on the acquired identification information, thereby making it possible to provide services to only a desired hand held terminal TE1. In addition, unlike a conventional apparatus, a register operator never makes a mistake to specify a hand held terminal TE1, making it possible to reliably establish a connection. Further, procedures for making a search for a Bluetooth terminal requiring a processing time are not executed, thus making it possible to provide services without impeding a work essential to a register.

Furthermore, it is possible to collect customer information such as purchase history by customer associated with identification information on technical terminal TE1 acquired for the purpose of setting a wireless transmission channel. Thus, by employing this purchase information, analysis of preference of each customer as well as purchased product sales management or inventory management can be carried out, making it possible to further provide services that differ depending on each customer.

In the above embodiment, although four different types of cash register apparatus RG1 are exemplified as a method for acquiring identification information ID of the hand held terminal TE1 required for setting a wireless transmission channel between the apparatus and the hand held terminal TE1 possessed by the customer that is a service provision destination, a method other than these four types is applicable without being limited thereto without departing from the spirit of the present invention.

In the above embodiment, although the cash register apparatus RG1 carries out discount caused by an electronic coupon or issuance of an electronic point, such processing may be executed by a computer connected to enable communication with this cash register apparatus RG1 via a network.

### (Second Embodiment)

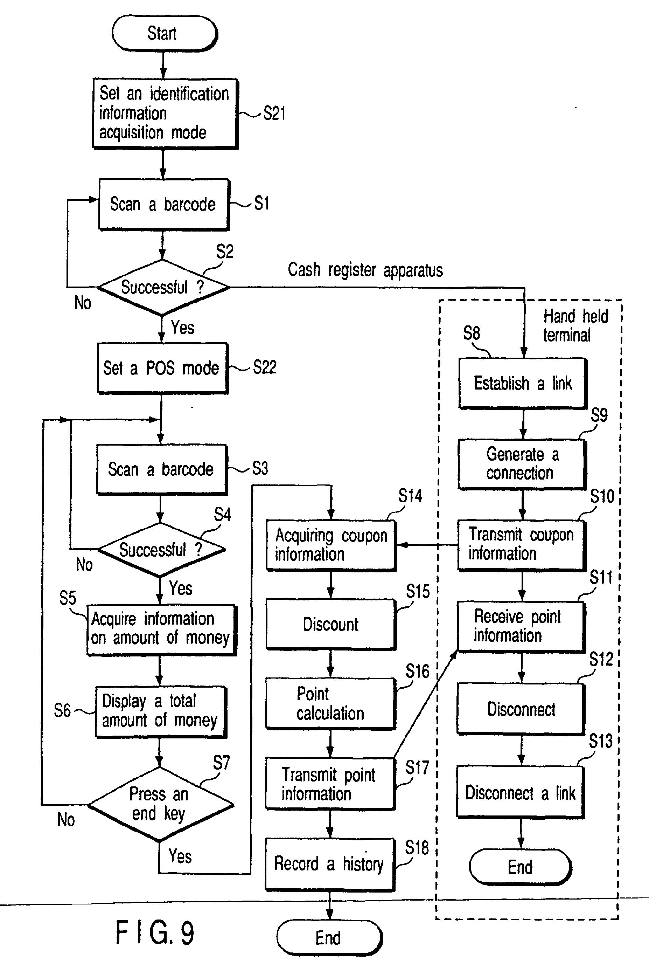

A second embodiment of the present invention will be described with reference to a flow chart shown in FIG. 9 by exemplifying the cash register apparatus RG1 when a bar code reader for reading identification information ID of the hand held terminal TE1 is compatible with a bar code reader 101 for reading a bar code of product P. In FIG. 9, like elements shown in FIG. 8 are designated by like reference numbers. Only the different elements will be described here.

In the case where the bar code reader 101 is used for bar code reading of identification information ID and bar code reading of product P, the cash register apparatus RG1 cannot judge which bar code is read. Thus, key input for instructing the cash register apparatus RG1 to specify which bar code is read is carried out, whereby either one of the bar code input mode for identification information ID and the bar code input mode for a product (POS mode) is set. For example, a mode switch button may be provided at a key input section 112.

In FIG. 9, a register operator press a mode switch button provided at the key input section 112 to set a bar code input mode for set a bar code input mode for identification information (step S21), and scans a bar code of identification information ID from the hand held terminal TE1 by means of a bar code reader 101 to acquire identification information ID of the hand held terminal TE1 (steps S1 and S2).

In the case where a bar code is successfully read at the step S2 (in the case where an inputted bar code can be recognized), change to the POS mode is made by the cash register apparatus RG1 itself (step S22), and then, registration processing as described in FIG. 8 at the step S3 and subsequent is executed.

In the case where bar code reading has failed at the step S2, the cash register apparatus RG1 does not change a mode. However, after a mode switch button provided at the key input section 112 has been pressed by the register operator, when POS mode setting is instructed, a change to the POS mode is made (step S22).

In the above second embodiment, although the register operator explicitly changes a mode, information for judging whether or not there is present identification information on the hand held terminal TE1 is inputted to the read bar code, so that, based on the above information, it may be judged whether there is present an identification information bar code or a product bar code of the hand held terminal TE1 in bar code recognition processing.

### (Third Embodiment)

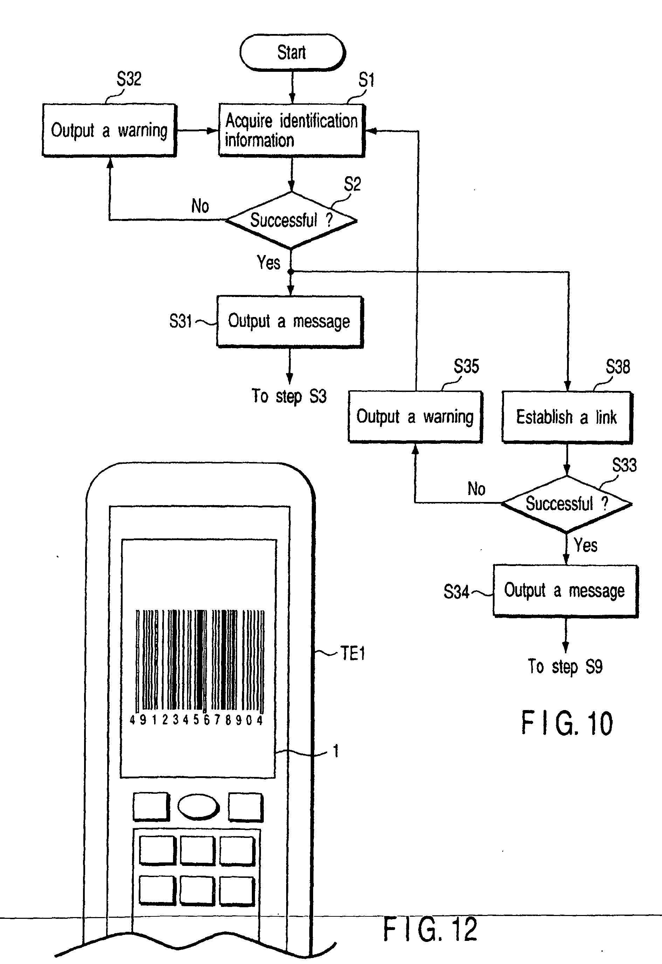

Now, a third embodiment of the present invention will be described with reference to a flow chart shown in FIG. 10. In FIG. 10, like elements shown in FIG. 8 are designated by like reference numerals. Only the different elements will be described here. That is, at the step S2, when identification information ID is not successfully acquired from the hand held terminal TE1, a cash register apparatus RG1 goes to the step S32, and outputs a warning for notifying the fact to the register operator. For example, the buzzer sounds or a message indicating that reading of identification information is impossible is displayed on a display section 109.

On the other hand, at the step S2, when the identification information ID is successfully acquired from the hand held terminal TE1, it is desired that a message indicating the fact be displayed on the display section 109 (step S31).

At the step S8, in establishing a link with the hand held terminal TE1 that has acquired identification information ID, when such link is established (step S33), a message notifying the fact to the register operator is displayed on a display section 109 (step S34). Alternatively, if a link is not successfully established (step S33), a warning for notifying the fact to the register operator is displayed on a display section 109. Then, processing reverts to the step S1 at which identification information ID may be acquired again.

In this way, the cash register apparatus RG1 notifies a processing state to the register operator as required in the operation process, whereby the register operator can grasp the processing state, and feel easiness.

In the present invention, what kind of service an information exchange apparatus provides to a hand held terminal TE1 is not limited in particular Therefore, although the above first to third embodiments have described a cash register apparatus as an example of information exchange apparatus, a configuration according to the present invention is applicable to an apparatus such that identification information may be acquired from only the hand held terminal TE1 that should be a communication counterpart, for example, a ticket collecting machine for carrying out ticket collection processing by making communication with the hand held terminal TE1, for example, in order to provide services without being limited thereto.

As has been described above, according to the present invention, a communication counterpart to be information exchanged via a short distance wireless communication can be easily and reliably specified.

## Claims

1. An information exchange method of exchanging information between a communication terminal (TE1) having a short distance wireless communication device (2) and a host (RG1) having another short distance wireless communication device (107) and an information acquisition device (102, 202, 204, 205), the method comprising:
acquiring identification information identifying the communication terminal by the information acquisition device;
causing the communication terminal to operate in a frequency hopping pattern;
establishing a short distance wireless communication path between the communication terminal and the host in reference to the identification information; and
initiating an information exchange between the communication terminal and the host based on a communication between the short distance wireless communication devices using the established short distance wireless communication path;
**characterized by**:
controlling the short distance wireless communication device of the host to:
transmit a page message that contains the identification information and causes the short distance wireless communication device of the communication terminal to operate in a frequency hopping pattern determined by the host being a master device; and
transmit a request, following the page message, for establishing a short distance wireless communication link;
generating a connection between the host and the communication terminal over the short distance wireless communication link established in response to the request; and
initiating the information exchange using that connection.

2. The method according to Claim 1, wherein
said acquiring includes reading a bar code on said communication terminal, the bar code indicating said identification information.

3. The method according to claim 2, wherein
said bar code is printed or attached on the communication terminal.

4. The method according to claim 2, wherein
said bar code is electrically displayed on the communication terminal.

5. The method according to claim 1, wherein
said acquiring includes receiving said identification information from said communication terminal to said host via an IrDA communication.

6. The method according to claim 1, wherein
said acquiring includes receiving said identification information transmitted from a wireless-tag disposed in said communication terminal.

7. The method according to claim 1, wherein
said acquiring includes:
detecting an image displayed on said communication terminal; and
processing the image thereby creating said identification information.

8. The method according to claim 1, wherein
said acquiring includes:
referring to a predetermined conversion table wherein said identification information acquired by said acquisition device is used, and acquiring a reference result; and
converting the reference result to a second identification information.

9. The method according to claim 1, wherein
said acquiring includes calculating a second identification information in accordance with a predetermined calculation procedure wherein said identification information acquired by said acquisition device is used.

10. The method according to claim 1, wherein
said short distance wireless communication includes a Bluetooth.

11. A cash register apparatus (RG1) configured to exchange information with a communication terminal (TE) and provide predetermined services to users who carry the communication terminal, the apparatus comprising:
a register mechanism;
a bar code reader (101) for reading a bar code of a product;
a register controller (111) for controlling the register mechanism to perform a register processing in respect to the bar code of the product,
a short distance wireless communication device (107),
an identification information acquisition device for acquiring identification information identifying the communication terminal;
means for causing the communication device to operate in a frequency hopping pattern, and means for establishing a short distance wireless communication path between the communication device and the communication terminal, and means for initiating an information exchange over that communication path;
**characterized by**:
a communication controller (106) for controlling the short distance wireless communication device to transmit a page message that contains the identification information and causes the short distance wireless communication device of the communication terminal to operate in a frequency hopping pattern determined by the short distance wireless communication device being a master device, and transmit a request, following the page message, for establishing a short distance wireless communication link, and
an information exchange device (103) for generating a connection between the short distance wireless communication device and the communication terminal over the short distance wireless communication link established in response to the request, and
initiating the said information exchange using the connection,
said register controller utilizing the exchanged information in said register processing to provide said services.

12. The apparatus according to claim 11, wherein said identification information acquisition device includes another bar code reader (102) for reading a bar code of the communication terminal.

13. The apparatus according to claim 11, wherein said identification information acquisition device includes a wireless tag receiver (202) for receiving a signal transmitted from a wireless tag of the communication terminal.

14. The apparatus according to claim 11, wherein said identification information acquisition device includes an infrared data communication device (204) for receiving a signal transmitted from the communication terminal.

15. The apparatus according to claim 11, wherein said identification information acquisition device includes an imaging device (205) for capturing an image, and processing the image to recognize said identification information identifying the communication terminal.

## Patentansprüche

1. Informationsaustauschverfahren zum Austauschen von Information zwischen einem Kommunikationsendgerät (TE1), das eine drahtlose Kommunikationsvorrichtung kurzer Reichweite (2) umfasst, und einem Host (RG1) mit einer anderen drahtlosen Kommunikationsvorrichtung kurzer Reichweite (107) und einer Informationserfassvorrichtung (102, 202, 204, 205), wobei das Verfahren umfasst:
Erfassen von Identifikationsinformation, die das Kommunikationsendgerät identifiziert, durch die Informationserfassungsvorrichtung;
Veranlassen des Kommunikationsendgeräts, in einem Frequenzsprungmuster zu arbeiten;
Einrichten eines drahtlosen Kommunikationsweges auf kurze Distanz zwischen dem Kommunikationsendgerät und dem Host in Bezug auf die Identifikationsinformation; und
Initiieren eines Informationsaustausches zwischen dem Kommunikationsendgerät und dem Host basierend auf einer Kommunikation zwischen den drahtlosen Kommunikationsvorrichtungen kurzer Reichweite unter Verwendung des eingerichteten drahtlosen Kommunikationsweges auf kurze Distanz;
**gekennzeichnet durch**:
das Steuern der drahtlosen Kommunikationsvorrichtung kurzer Reichweite des Hosts zum:
Übertragen einer die Identifikationsinformation enthaltenden Page-Nachricht und Veranlassen der drahtlosen Kommunikationsvorrichtung kurzer Reichweite des Kommunikationsendgeräts, in einem Frequenzsprungmuster zu arbeiten, das von dem Host bestimmt wird, welcher eine Master-Vorrichtung ist; und
Übermitteln einer Anforderung, im Anschluss an die Page-Nachricht, zum Einrichten eines drahtlosen Kommunikations-Links auf kurze Distanz;
Erzeugen einer Verbindung zwischen dem Host und dem Kommunikationsendgerät über den als Antwort auf die Anforderung eingerichteten drahtlosen Kommunikations-Link auf kurze Distanz; und
Initiieren des Informationsaustauschs unter Verwendung jener Verbindung.

2. Verfahren nach Anspruch 1, wobei
die Erfassung das Lesen eines Strichcodes auf dem Kommunikationsendgerät beinhaltet, wobei der Strichcode die Identifikationsinformation angibt.

3. Verfahren nach Anspruch 2, wobei
der Strichcode auf das Kommunikationsendgerät aufgedruckt oder darauf angebracht ist.

4. Verfahren nach Anspruch 2, wobei
der Strichcode auf dem Kommunikationsendgerät elektrisch angezeigt wird.

5. Verfahren nach Anspruch 1, wobei
die Erfassung das Empfangen der Identifikationsinformation des Kommunikationsendgeräts durch den Host über eine IrDA-Kommunikation beinhaltet.

6. Verfahren nach Anspruch 1, wobei
die Erfassung das Empfangen der Identifikationsinformation, die von einem in dem Kommunikationsendgerät vorgesehenen drahtlosen Etikett übertragen wird, beinhaltet.

7. Verfahren nach Anspruch 1, wobei
die Erfassung beinhaltet:
das Detektieren eines Bildes, das auf dem Kommunikationsendgerät angezeigt wird; und
das Verarbeiten des Bildes unter Erzeugung der Identifikationsinformation.

8. Verfahren nach Anspruch 1, wobei
die Erfassung beinhaltet:
die Bezugnahme auf eine vorbestimmte Umwandlungstabelle, in der die von der Erfassungsvorrichtung erfasste Identifikationsinformation verwendet wird, und Erfassen eines Referenzergebnisses; und
Umwandeln des Referenzergebnisses in eine zweite Identifikationsinformation.

9. Verfahren nach Anspruch 1, wobei
die Erfassung das Berechnen einer zweiten Identifikationsinformation in Übereinstimmung mit einem vorbestimmten Berechnungsverfahren beinhaltet, in dem die von der Erfassungsvorrichtung erfasste Information verwendet wird.

10. Verfahren nach Anspruch 1, wobei
die drahtlose Kommunikation auf kurze Distanz Bluetooth beinhaltet.

11. Registrierkassenvorrichtung (RG1), die ausgebildet ist, um Information mit einem Kommunikationsendgerät (TE) auszutauschen und Nutzern, die das Kommunikationsendgerät bei sich tragen, vorbestimmte Dienstleistungen zur Verfügung zu stellen, wobei die Vorrichtung umfasst:
einen Registriermechanismus;
ein Strichcode-Lesegerät (101) zum Lesen eines Strichcodes eines Produkts;
eine Registriersteuerung (111) zum Steuern des Registriermechanismus zum Durchführen einer Registrierverarbeitung in Bezug auf den Strichcode des Produkts;
eine Kommunikationsvorrichtung kurzer Reichweite (107);
eine Identifikationsinformationserfassungsvorrichtung zum Erfassen von Identifikationsinformation, die das Kommunikationsendgerät identifiziert;
eine Einrichtung zum Veranlassen der Kommunikationsvorrichtung, in einem Frequenzsprungmuster zu arbeiten, und eine Einrichtung zum Einrichten eines drahtlosen Kommunikationsweges auf kurze Distanz zwischen der Kommunikationsvorrichtung und dem Kommunikationsendgerät, und eine Einrichtung zum Initiieren eines Informationsaustausches über den Kommunikationsweg;
**gekennzeichnet durch**:
eine Kommunikationssteuerung (106) zum Steuern der drahtlosen Kommunikationsvorrichtung kurzer Reichweite zum Übertragen einer die Identifikationsinformation enthaltenden Page-Nachricht und Veranlassen der drahtlosen Kommunikationsvorrichtung kurzer Reichweite des Kommunikationsendgeräts, in einem Frequenzsprungmuster zu arbeiten, das von der drahtlosen Kommunikationsvorrichtung kurzer Reichweite, welche eine Master-Vorrichtung ist, bestimmt wird, und Übertragen einer Anforderung, im Anschluss an die Page-Nachricht, zum Einrichten eines drahtlosen Kommunikations-Links auf kurze Distanz, und
eine Informationsaustauschvorrichtung (103) zum Erzeugen einer Verbindung zwischen der drahtlosen Kommunikationsvorrichtung kurzer Reichweite und dem Kommunikationsendgerät über den als Antwort auf die Anforderung eingerichteten drahtlosen Kommunikations-Link auf kurze Distanz, und
Initiieren des Informationsaustausches unter Verwendung der Verbindung,
wobei die Registriersteuerung die ausgetauschte Information bei der Registrierverarbeitung zum Bereitstellen der Dienstleistungen benutzt.

12. Vorrichtung nach Anspruch 11, wobei die Identifikationsinformationserfassungsvorrichtung ein weiteres Strichcodelesegerät (102) zum Lesen eines Strichcodes des Kommunikationsendgerätes beinhaltet.

13. Vorrichtung nach Anspruch-11, wobei die Identifikationsinformationserfassungsvorrichtung einen Empfänger (202) für drahtlose Etiketten zum Empfangen eines von einem drahtlosen Etikett des Kommunikationsendgeräts übertragenen Signals beinhaltet.

14. Vorrichtung nach Anspruch 11, wobei die Identifikationsinformationserfassungsvorrichtung eine Infrarotdaten-Kommunikationsvorrichtung (204) zum Empfangen eines von dem Kommunikationsendgerät übertragenen Signals beinhaltet.

15. Vorrichtung nach Anspruch 11, wobei die Identifikationsinformationserfassungsvorrichtung eine Abbildungsvorrichtung (205) zum Aufnehmen eines Bildes und Verarbeiten des Bildes zum Erkennen der das Kommunikationsendgerät identifizierenden Identifikationsinformation beinhaltet.

## Revendications

1. Procédé d'échange d'information permettant d'échanger une information entre un terminal de communication (TE1) disposant d'un dispositif de communication sans fil courte distance (2) et un hôte (RG1) disposant d'un autre dispositif de communication sans fil courte distance (107) et d'un dispositif d'acquisition d'information (102, 202, 204, 205), le procédé comprenant :
l'acquisition d'une information d'identification qui identifie le terminal de communication au moyen du dispositif d'acquisition d'information ;
l'action consistant à faire en sorte que le terminal de communication fonctionne selon un motif de saut de fréquence ;
l'établissement d'une voie de communication sans fil courte distance entre le terminal de communication et l'hôte par référence à l'information d'identification ; et
l'initiation d'un échange d'information entre le terminal de communication et l'hôte sur la base d'une communication entre les dispositifs de communication sans fil courte distance en utilisant la voie de communication sans fil courte distance établie,
**caractérisé par** :
la commande du dispositif de communication sans fil courte distance de l'hôte pour :
émettre un message de messagerie qui contient l'information d'identification et qui a pour effet que le dispositif de communication sans fil courte distance du terminal de communication fonctionne selon un motif de saut de fréquence qui est déterminé par l'hôte qui est un dispositif maître ; et
émettre une requête, qui fait suite au message de messagerie, pour établir une liaison de communication sans fil courte distance ;
la génération d'une connexion entre l'hôte et le terminal de communication sur la liaison de communication sans fil courte distance qui est établie en réponse à la requête ; et
l'initiation de l'échange d'information en utilisant cette connexion.

2. Procédé selon la revendication 1, dans lequel :
ladite acquisition inclut la lecture d'un code à barres sur ledit terminal de communication, le code à barres indiquant ladite information d'identification.

3. Procédé selon la revendication 2, dans lequel :
ledit code à barres est imprimé ou fixé sur le terminal de communication.

4. Procédé selon la revendication 2, dans lequel :
ledit code à barres est affiché électriquement sur le terminal de communication.

5. Procédé selon la revendication 1, dans lequel :
ladite acquisition inclut la réception de ladite information d'identification depuis ledit terminal de communication sur ledit hôte via une communication IrDA.

6. Procédé selon la revendication 1, dans lequel :
ladite acquisition inclut la réception de ladite information d'identification qui est émise depuis une étiquette sans fil qui est disposée dans ledit terminal de communication.

7. Procédé selon la revendication 1, dans lequel :
ladite acquisition inclut :
la détection d'une image qui est affichée sur ledit terminal de communication ; et
le traitement de l'image en créant ainsi ladite information d'identification.

8. Procédé selon la revendication 1, dans lequel :
ladite acquisition inclut :
le fait de se référer à une table de conversion prédéterminée dans laquelle ladite information d'identification qui est acquise par ledit dispositif d'acquisition est utilisée et d'acquérir un résultat de référence ; et
la conversion du résultat de référence selon une seconde information d'identification.

9. Procédé selon la revendication 1, dans lequel :
ladite acquisition inclut le calcul d'une seconde information d'identification conformément à une procédure de calcul prédéterminée selon laquelle ladite information d'identification qui est acquise par ledit dispositif d'acquisition est utilisée.

10. Procédé selon la revendication 1, dans lequel :
ladite communication sans fil courte distance inclut Bluetooth.

11. Appareil de caisse enregistreuse (RG1) qui est configuré pour échanger une information avec un terminal de communication (TE) et pour fournir des services prédéterminés à des utilisateurs qui sont porteurs du terminal de communication, l'appareil comprenant :
un mécanisme d'enregistrement ;
un lecteur de code à barres (101) pour lire un code à barres d'un produit ;
un contrôleur d'enregistrement (111) pour commander le mécanisme d'enregistrement pour réaliser un traitement d'enregistrement en relation avec le code à barres du produit ;
un dispositif de communication sans fil courte distance (107) ;
un dispositif d'acquisition d'information d'identification pour acquérir une information d'identification qui identifie le terminal de communication ;
un moyen pour faire en sorte que le dispositif de communication fonctionne selon un motif de saut de fréquence et un moyen pour établir une voie de communication sans fil courte distance entre le dispositif de communication et le terminal de communication et un moyen pour initier un échange d'information sur cette voie de communication,
**caractérisé par** :
un contrôleur de communication (106) pour commander le dispositif de communication sans fil courte distance pour émettre un message de messagerie qui contient l'information d'identification et qui a pour effet que le dispositif de communication sans fil courte distance du terminal de communication fonctionne selon un motif de saut de fréquence qui est déterminé au moyen du dispositif de communication sans fil courte distance qui est un dispositif maître, et pour émettre une requête, à la suite du message de messagerie, pour établir une liaison de communication sans fil courte distance ; et
un dispositif d'échange d'information (103) pour générer une connexion entre le dispositif de communication sans fil courte distance et le terminal de communication sur la liaison de communication sans fil courte distance qui est établie en réponse à la requête et pour initier ledit échange d'information en utilisant la connexion,
ledit contrôleur d'enregistrement utilisant l'information échangée au niveau dudit traitement d'enregistrement pour fournir lesdits services.

12. Appareil selon la revendication 11, dans lequel ledit dispositif d'acquisition d'information d'identification inclut un autre lecteur de code à barres (102) pour lire un code à barres du terminal de communication.

13. Appareil selon la revendication 11, dans lequel ledit dispositif d'acquisition d'information d'identification inclut un récepteur d'étiquette sans fil (202) pour recevoir un signal qui est émis depuis une étiquette sans fil du terminal de communication.

14. Appareil selon la revendication 11, dans lequel ledit dispositif d'acquisition d'information d'identification inclut un dispositif de communication de données par rayons infrarouges (204) pour recevoir un signal qui est émis depuis le terminal de communication.

15. Appareil selon la revendication 11, dans lequel ledit dispositif d'acquisition d'information d'identification inclut un dispositif imageur (205) pour capturer une image et pour traiter l'image afin de reconnaître ladite information d'identification qui identifie le terminal de communication.
